(19) Europäisches Patentamt
European Patent Office
Office européen des brevets

(11) EP 2 092 653 B1

(12) EUROPEAN PATENT SPECIFICATION

(45) Date of publication and mention
of the grant of the patent:
**07.11.2012 Bulletin 2012/45**

(51) Int Cl.:
***H04B 1/10*** (2006.01)

(21) Application number: **07869029.4**

(22) Date of filing: **07.12.2007**

(86) International application number:
**PCT/US2007/086718**

(87) International publication number:
**WO 2008/076664 (26.06.2008 Gazette 2008/26)**

(54) **Method and system for detecting periodic intermittent interference**

Verfahren und System zur Entdeckung periodisch intermittierender Interferenzen

Procédé et système pour détecter des interférences intermittentes périodiques

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 US 611732**

(43) Date of publication of application:
**26.08.2009 Bulletin 2009/35**

(73) Proprietor: **Motorola Mobility LLC
Libertyville, IL 60048 (US)**

(72) Inventors:
• **MAKHLOUF, Isam R.
Lake Zurich, Illinois 60047 (US)**
• **EMEOTT, Stephen P.
Rolling Meadows, IL 60008 (US)**

(74) Representative: **McLeish, Nicholas Alistair Maxwell
Boult Wade Tennant
Verulam Gardens
70 Gray's Inn Road
London WC1X 8BT (GB)**

(56) References cited:
**EP-A- 1 119 153         WO-A-01/65709
US-A1- 2003 126 492**

## Description

### FIELD

This invention relates wireless communications, and more particularly to a method and system for efficiently detecting periodic intermittent interference (PII) on wireless devices.

### BACKGROUND

End users of voice over WiFi systems may experience poor audio quality or even a dropped call when using a handheld device that is unable to receive and decode voice and control packets on a noisy channel. For example, the periodic intermittent interference (PII) emitted by microwave ovens may disrupt or impair communications between an access point and a handheld device implemented according to the IEEE 802.11 standard (and operating in the 2.4 GHz band). A means of detecting and avoiding on-channel interference from entities such as microwave ovens is desired to improve the audio quality experience of the end users who own and operate voice over WiFi or WLAN devices (VoWLAN).

Consider a VoWLAN handset using the access methods defined by IEEE 802.11. The access methods utilize a collision sensing mechanism referred to as the clear channel assessment (CCA) algorithm that senses the energy level on the channel. Since this algorithm is used to defer channel access while energy is above some threshold, the existing scheme may already seem well-suited to sensing microwave interference. Detection performance can, however, still suffer in certain scenarios as described below.

Perhaps the main shortfall of the CCA algorithm becomes evident when the interference level is below the CCA threshold (particularly at one end of the link) but still high enough to result in a low C/I and corrupted packets (again, at one end of the link). With 802.11 a/g, the CCA threshold is -62dBm for an invalid OFDM frame, 20dB higher than that for a valid frame, so this scenario is much more likely to occur with PII than with another 11a/g device.

When this scenario occurs, the CCA algorithm signals that the channel is clear and frame deliveries (and any subsequent acknowledgements (ACKs)) are attempted while interference is present. The result is that initial delivery attempts and some or possibly even all retransmissions are not likely to be successful. Even when the CCA algorithm is successful at detecting PII on the channel, the channel may be sensed as being clear during a brief absence of PII only to have the interference return and corrupt the subsequent transmissions (data and/or ACKs) that are initiated. This is especially an issue for rapidly varying (relative to frame lengths) PII.

Several patent applications propose various means for avoiding intermittent interference once it is detected. None of these filings teach how to implement a detection mechanism, but a common theme is that each relies on knowledge of electromagnetic characteristics of the PII such as on/off timing and center-frequency. This approach can be problematic for a few reasons.

For one, obtaining information about the PII can be power-inefficient for a handset implementation, as it requires constant monitoring of the channel. Even ignoring this issue, taking continuous measurements may not be feasible if traffic (i.e. voice packets) must be transmitted at regular intervals. The direct detection approach is even less feasible at an AP located some distance from the device emitting the interference. Making energy measurements across several channels (to determine the center-frequency of the interference) is also not a realistic option for the AP which cannot go off-frequency while serving stations. Another issue with the direct interference-detection approach has to do with the energy characteristics of a prevalent PII source for WLANs operating in the ISM band, namely microwave ovens. Household microwave ovens use magnetron tubes that operate with a ~50% duty cycle over 16.67ms (1/60Hz) periods in North America (20ms, 1/50Hz in the rest of the world). Although the timing characteristics of the emitted energy can generally be described as a square wave, certain ovens have less well-defined emission characteristics in which the energy level varies unpredictably during the "on" periods. Assessments of several existing ovens plotting time vs. amplitude measurements reflect that a number of ovens behave this way. In such cases, the on/off timing may not be reliably detectable. Further note even If PII is detected, if it is not adversely impacting system performance then reacting to it may be undesirable. Also, switching channels to monitor Interference levels across different frequencies is an unrealistic proposition for an AP serving STAs on a given channel.

US 2003/126492 describes a method for increasing data throughput on a wireless local area network in the presence of intermittent interference. The method of one embodiment comprises receiving a data packet through a wireless channel. Quality of the wireless channel is evaluated. A packet error ratio (PER) value is calculated for the data packet. The PER value is checked as to whether it is within an acceptable level. A determination is made as to whether an intermittent noise is affecting the PER value.

US 2006/0120333 describes a method for time domain avoidance of communications link interference sources characterised by intermittent, periodic short bursts of energy, such as a microwave oven. A transmitting source can be assigned two time slots within a time domain multiple access data frame over which each data packet can be transmitted. The time slots are separated by a duration greater than that of an interference burst, such that an interference burst does not affect both time slots in any given frame. Transmitter power consumption can be reduced by calculating the timing of the periodic interference bursts, and only transmitting a data packet on one of the two assigned time slots that will not coincide with an interference burst in each frame.

## SUMMARY

In accordance with the present invention there is provided a method of detecting periodic intermittent interference (PII) and a communication device as recited in the accompanying claims.

Embodiments in accordance with the present invention can provide a simple method of detecting PII by tracking performance statistics. Such method can further be used to efficiently detect PII without continuously monitoring the energy on a channel. Rather than attempting to directly measure and identity the interference waveform, as much of the art proposes to do, the embodiments herein can infer the presence of PII based on traffic retransmission characteristics and/or probing statistics. It can also be a more power efficient approach (more compatible with power save schemes) than existing schemes because it does not require constant monitoring of the channel to detect PII as noted above.

In a first embodiment of the present invention, a method of detecting periodic Intermittent interference (PII) can Include the steps of tracking retransmission statistics of isochronous traffic or tracking channel probe request failures corresponding to temporal characteristics of microwave oven interference and signaling PII if the retransmission statistics exceed a predetermined threshold or If the probe failure requests exceed another predetermined threshold. Tracking retransmission statistics can be done by tracking MAC layer statistics. Tracking retransmission statistics can bo done by tracking retransmission statistics for Voice over WLAN traffic or tracks success and failures of probe requests for data traffic. Tracking retransmission statistics can also be done by tracking a number of retransmission attempts required per transmission opportunity (TXOP). The method can further include the step of introducing hysteresis In the detection of the PII to prevent rapid entering and exiting from a current detection mode. The method can further Include the step of correlating using a correlator to detect alternating periods of low and high retransmission counts of isochronous traffic. The method can correlate retransmission statistics with a stored retransmission pattern and signal detection of PII if a correlation exceeds a predetermined correlation threshold. The method can signal detection of PII If the correlation exceeds the predetermined correlation threshold and else Increment a probation counter and indicate a lack of PII detected until the probation counter exceeds a predetermined probation threshold. Note, the signaling of PII using retransmission statistics or probe failure request is an indirect detection mode and the method can further include the step of operating in a direct PII detection mode if the indirect detection mode indicates PII.

In a second arrangement, a method of efficiency detecting periodic intermittent interference, (PII) can include the steps of indirectly monitoring or inferring if a PII source is degrading performance of a radio receiving device and directly monitoring the PII using a direct energy-based PII detection mechanism when the PII source is detected by indirectly monitoring or by inferring. Indirectly monitoring or inferring can Include the step of monitoring MAC layer statistics. Note, Indirectly monitoring or Inferring can be done without continuously monitoring energy on a channel. The method can further include the step of continuing to directly monitor until PII is no longer detected for a predetermined period of time or a probation period. The method can resume to indirectly monitor after the predetermined period of time or probation period lapses.

In a third arrangement, a communication device can include a receiver, a pre-detector coupled to the receiver where the pre-detector is programmed to indirectly monitor or infer if a periodic intermittent inference (PII) source Is degrading performance of the receiver and a direct detector coupled to the receiver, where the direct detector Is programmed to directly monitor the PII source using a direct energy-based PII diction mechanism when the PII source is detected by the pre-detector. The pre-detector can further indirectly monitor or infer by monitoring MAC layer statistics for retransmissions and can indirectly monitor or infer without continuously monitoring energy on a channel. The direct detector can also continue to directly monitor until PII is no longer detected for a predetermined period of time or for a probation period. The pre-detector can resume to indirectly monitor after the predetermined period of time or probation period lapses. The communication device can be an access point or a portable mobile station in a WLAN or WiMAX or WiFi communication system.

The terms "a" or "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The term "coupled," as used herein, is defined as connected, although not necessarily directly, and not necessarily mechanically.

The terms "program," "software application," and the like as used herein, are defined as a sequence of instructions designed for execution on a computer system. A program, computer program, or software application may include a subroutine, a function, a procedure, an object method, an object implementation, an executable application, an applet, a servlet, a midlet, a source code, an object code, a shared library/dynamic load library and/or other sequence of instructions designed for execution on a computer system. The "processor" as described herein can be any suitable component or combination of components, including any suitable hardware or software, that are capable of executing the processes described in relation to the inventive arrangements.

Other embodiments, when configured in accordance with the inventive arrangements disclosed herein, can include a system for performing and a machine readable storage for causing a machine to perform the various processes and methods disclosed herein.

## BRIEF DESCRIPTION OF THE DRAWINGS

FIG. 1 is a flow chart of a method of detecting PII in accordance with an embodiment of the present invention.

FIG. 2 is a block diagram illustrating a communication system subjected to PII in accordance with an embodiment of the present invention.

FIG. 3 is a flow chart illustrating another method of detecting PII in accordance with an embodiment of the present invention.

FIG. 4 is a table illustrating correlation patterns in accordance with an embodiment of the present invention.

FIG. 5 is a block diagram of a correlator in accordance with an embodiment of the present invention.

FIG. 6 is a sample test matrix for the correlator of FIG. 5 in accordance with an embodiment of the present invention.

FIG. 7 is a flow chart illustrating another method of detecting PII in accordance with an embodiment of the present invention.

FIG. 8 is an illustration of another system for detecting PII in accordance with an embodiment of the present invention.

## DETAILED DESCRIPTION OF THE DRAWINGS

While the specification concludes with claims defining the features of embodiments of the invention that are regarded as novel, it is believed that the invention will be better understood from a consideration of the following description in conjunction with the figures, in which like reference numerals are carried forward.

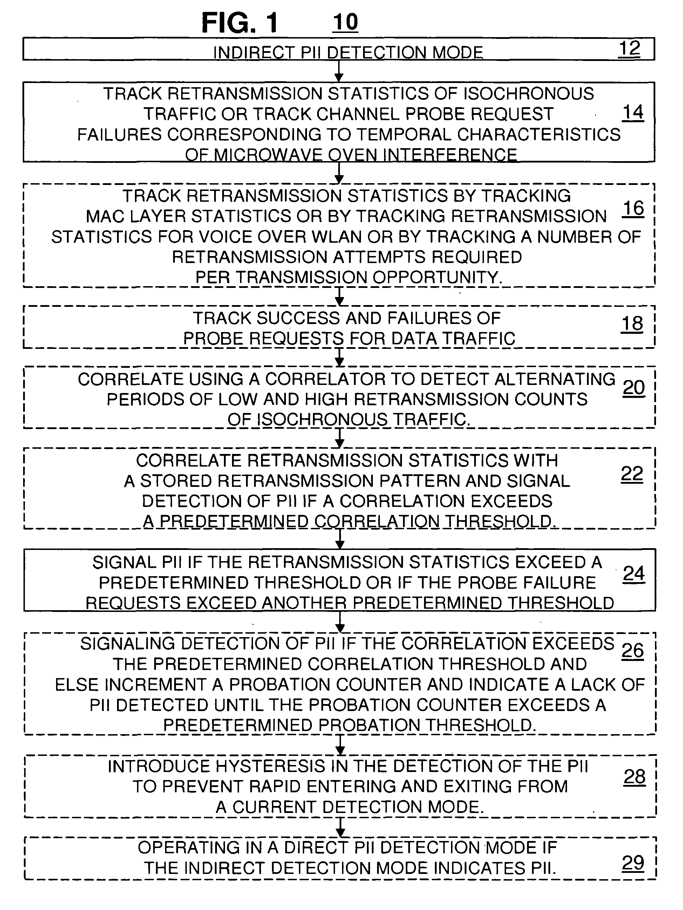

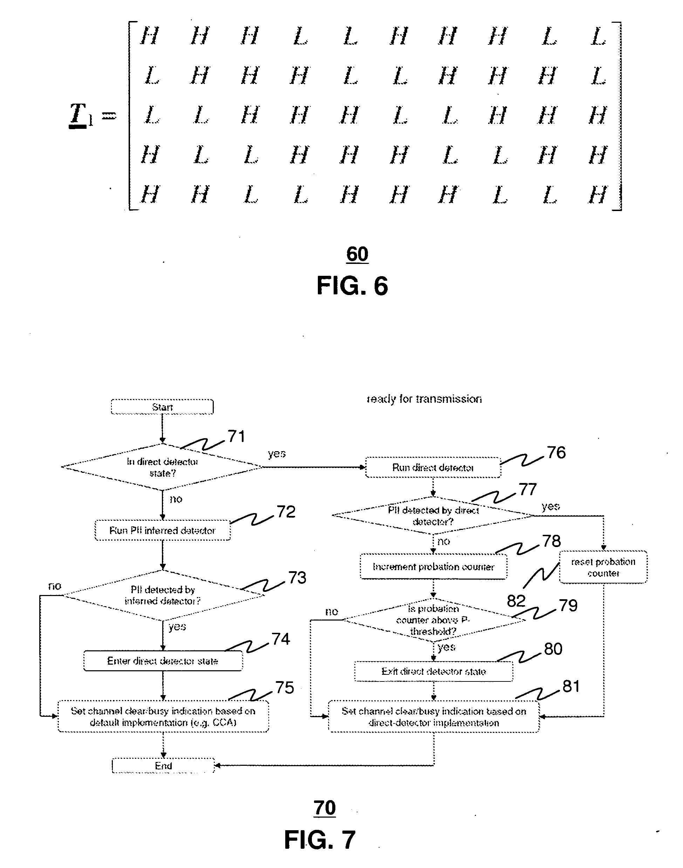

Referring to FIG. 1, a flow chart illustrating a method 10 of detecting periodic intermittent interference (PII). For the most part, the method is operating in an indirect or inferential PII detection mode beginning at step 12. The method 10 can track retransmission statistics of isochronous traffic or alternatively track or channel probe request failures corresponding to temporal characteristics of microwave oven interference at step 14. Such tracking can be done in a number of ways including at step 16 by tracking retransmission statistics by tracking MAC layer statistics or by tracking retransmission statistics for Voice over WLAN or by tracking a number of retransmission attempts required per transmission opportunity. In yet another alternative, the method 10 can track success and failures of probe requests for data traffic at step 18. Other tracking schemes can use correlation. At step 20, the method can correlate using a correlator to detect alternating periods of low and high retransmission counts of isochronous traffic. At step 22, the method can correlate retransmission statistics with a stored retransmission pattern and signal detection of PII if a correlation exceeds a predetermined correlation threshold. The method 10 can then signal PII if the retransmission statistics exceed a predetermined threshold or if the probe failure requests exceed another predetermined threshold at step 24. In one alternative step 26, the method 10 can signal detection of PII if the correlation exceeds the predetermined correlation threshold and else increment a probation counter and indicate a lack of PII detected until the probation counter exceeds a predetermined probation threshold. The method can further introduce hysteresis in the detection of the PII to prevent rapid entering and exiting from a current detection mode at step 28. At step 29, the method can further operate in a direct PII detection mode if the indirect detection mode indicates PII. This step can be further appreciated with respect to FIG. 7.

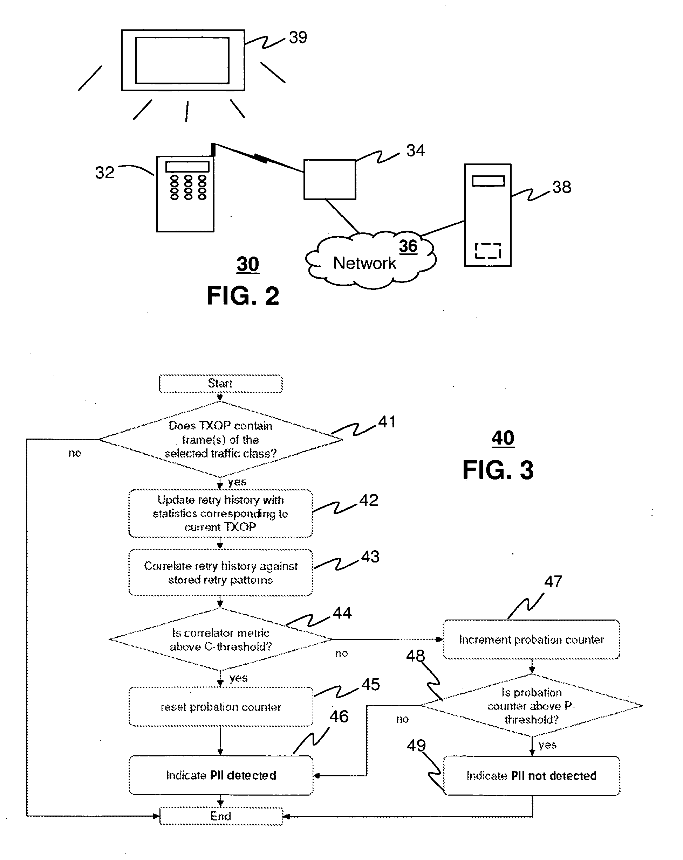

With reference to FIG. 2, a simple communication system 30 subjected to PII is illustrated. The system 30 can include a Wifi or WLAN radio transceiver unit or communication handset 32 operatively coupled to an access point (AP) 34. The access point 34 can be coupled to computer or server 38 via a communication network 36. The PII source 39 can be any number of device, but in most instances will likely be a microwave oven.

Referring to FIG. 3, a flow chart illustrating a method 40 of detecting PII is shown. As noted above, the method can indirectly detect PII or detect PII by inferring from the operational statistics of the communication device. The method shown in only one example of the ways such method can be accomplished in accordance with the embodiments. At decision block 41, method determines if the current transmission operation (TXOP) contain a frame or frames of a selected transmission class indicative of PII. If so, the retry history is updated at step 42 with statistics corresponding to the current TXOP. At step 43, the retry history is correlated against the stored retry patterns. If the correlator metric is above a predetermined correlator threshold at decision block 44, then PII is likely present and PII is indicated at step 46. To avoid hasty exits and entries into this mode of operation, a probation counter can be reset at step 45 before signaling the PII indication at step 46. If the correlator metric is not above the predetermined correlator threshold at decision block 44, then the probation counter can be incremented at step 47. If the probation counter is above a probation threshold at decision block 48, then no PII is detected and the method can signal or indicate affirmatively that no PII is detected at step 49. If the probation counter is not above the probation threshold, then PII is indicated as previously discussed with step 46. The probation counter is used to introduce hysteresis into the method.

The methods herein for detecting PII can use MAC layer statistics, such as retransmission statistics of isochronous traffic and/or success and failures of active probing for data traffic. The methods can be implemented in either an Access Point, a handset or both.

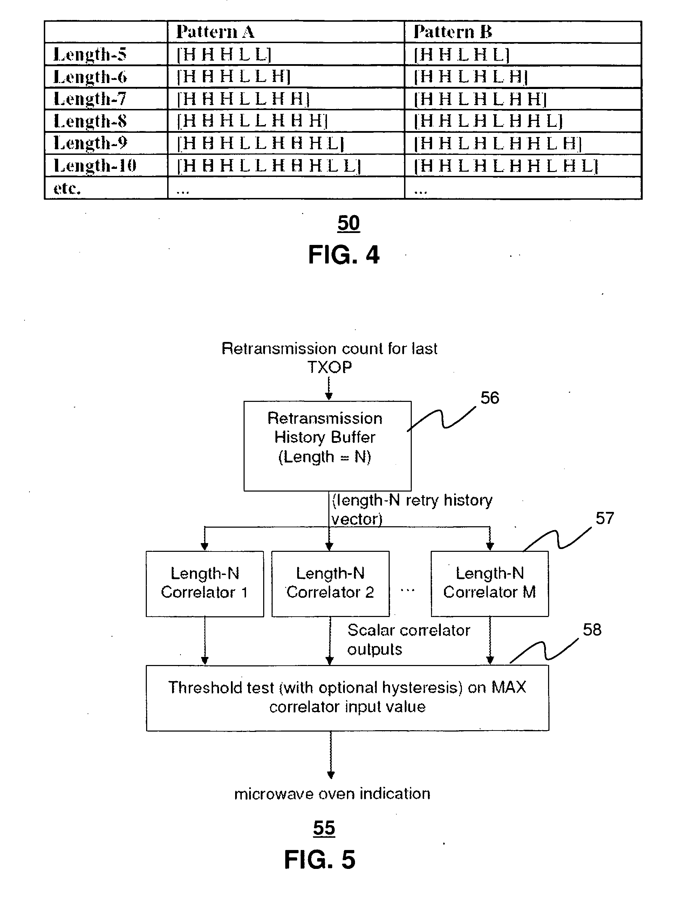

With reference to FIGs. 4-6, another embodiment can use a correlation scheme as follows. When packet deliveries are attempted to a device being affected by interference, packet loss is likely. Since a device affected by interference will frequently not acknowledge (ACK) transmitted packets, the transmitting device will assume the packet was not delivered successfully. Similarly, if a packet delivery is successful but the transmitting device does not successfully receive the ACK that is sent back due to interference, it too would assume that the packet delivery was unsuccessful. In either case, retransmissions can occur based on the IEEE 802.11 distributed coordination function (DCF) mechanism. However, if the PII "on-cycles" are long relative to retry back-off intervals, some number (and indeed, sometimes all) of the retransmissions are likely to be lost as well. For example, the interference energy from most microwave ovens operating on 60Hz AC power cycles on and off for 8.3ms at a time, while the IEEE 802.11 DCF mechanism specifies maximum back-off periods of roughly 0.5, 1.1, 2.2, and 4.4ms (a total of approximately 8.2ms) for the first 4 retransmissions respectively. Since isochronous traffic (such as VoIP) provides a somewhat regular sampling interval of the channel, the embodiments herein infer the presence of a PII source that is causing lost packets through the analysis of retransmission statistics.

In one embodiment, the number of retransmission attempts required per TXOP (up to the retransmission limit) is tracked and a correlator 55 (as shown in FIG. 5) can be used to detect alternating periods of low and high retransmission counts that correspond to the temporal characteristics of microwave oven interference. For the case where TXOPs occur approximately every 20ms (e.g. VoIP frames), then the correlation patterns A: [H H H L L] and B: [H H L H L] can be used where "H" corresponds to a high retransmission count and "L" a low count.

One implementation can use H = 7 (assuming this is the maximum allowed retransmission count for VoIP frames) and L = 0 (since the retransmission rate should be close to zero during the microwave oven off cycles given a reasonable channel signal-to-noise ratio (SNR)) for example. The first pattern corresponds to microwave ovens with on/off periods that occur with 60Hz frequency and the second for ovens with 120Hz on/off frequency (both types of ovens have been observed). Each of the patterns is tested and the higher correlator output value is used. Correlator sensitivity can be traded off against latency by correlating against longer patterns that follow the same on/off characteristics. Extended (beyond length-5) versions of the correlation patterns introduced above are shown in the table 50 of FIG. 4.

The block diagram of FIG. 5 illustrates the correlator 55 implementation. Each correlator block 57 (Correlator 1 through M) is responsible for testing a unique retransmission pattern. For example, there may be two correlators (M=2) where Correlator 1 tests for Pattern A (from FIG. 4) and Correlator 2 tests for Pattern B. If a retransmission history buffer 56 having a length-10 buffer (N=10) is assumed, then each correlator tests for its respective length-10 version of the pattern from the table 50. The scalar correlator outputs can then be put through a threshold test 58. A matrix multiplication approach can be taken to test for each of the possible circularly rotated "phases" of the retransmission patterns when computing the correlator output. For example, the test matrix, $T1$ or 60, for Correlator 1 can be defined as shown in FIG. 6.

If the retransmission buffer vector is defined $v = [r1\ r2\ r3\ ...\ r10]T$ ($r1$ retries for the oldest TXOP in the history, $r2$ for the second oldest, etc.), then the output, $c1$, for Correlator 1 is computed via the following expression:

$$c1 = max(T1 * v).$$

When the correlator peak $c1$ is above a predetermined threshold, PII detection is signaled. The "PII detected" state is exited when the correlator peak is below the pre-determined threshold for some minimum amount of time (a probation period). This introduces some hysteresis in the correlator output, which is important this aspect of the embodiment is used in conjunction with a PII avoidance implementation in which transmission (initial or retry) timing is modified. Additional hysteresis can also be introduced by using a lower exit correlation threshold.

A less complex but more false-alarm prone embodiment can simply use the percentage of high retransmission counts among the recent history of TXOPs as the detection metric. If the metric is above some threshold such as 20% for example, microwave oven detection can be signaled. This less complex embodiment can be used in cases where the penalty of false detection is low. Another embodiment of the invention can use duplicate packet statistics either instead of, or in addition to retransmission statistics, to infer the presence of PII. This approach can be useful if retransmission statistics are unavailable for any reason.

It is important to note that since this the embodiments herein generally rely on the roughly periodic nature of isochronous traffic to infer the channel conditions, it should generally be applied to traffic sent out through queues established for such isochronous traffic. Retransmission statistics for delivery attempts through other (non-isochronous) queues (such as for data) should therefore be avoided. In cases where isochronous traffic is extremely non-uniform in its periodicity, or altogether non-existent (e.g., if data is the only traffic type), a more active approach may be taken. With this embodiment, instead of relying on the failed packet delivery attempt statistics of scheduled traffic, measurement requests can be transmitted to probe the channel conditions on the other end of the link. These requests can be scheduled either in lieu of regularly spaced traffic or in addition to it in order to obtain more finely sampled channel characteristics. The timing of the actual responses (or lack thereof) implies timing characteristics of local interference. The presence of PII can once again be inferred. This approach can be combined with the first one to maintain performance regardless of the traffic type(s) being supported at any given time.

As mentioned above, the embodiments can be implemented in either the AP or STA/handset. Assuming the PII source is located closer to the handset than the AP, an AP implementation can be based on retransmission statistics due to unsuccessful frame deliveries to the handset which are not acknowledged. With a handset implementation, the AP retransmissions would not be detected, but the lost ACKs sent back to the handset after successful uplink frame deliveries to the AP would result in retransmissions. In either case the embodiments herein work the same.

Given the assumption that a STA/handset is more likely to be located near the PII source, an AP implementation is especially useful when an AP-scheduled (AP-triggered) delivery mode is being used since the PII energy on the channel may not otherwise be detected (and hence, avoided) by the AP (e.g., via CCA or some other direct means). The 802.11 e scheduled automatic power save delivery (S-APSD) scheme, for example, is an AP-triggered mode in which an AP implementation of the embodiments would be helpful. On the other hand, a STA/handset implementation of the embodiments is desirable in handset-scheduled (handset-triggered) delivery modes due to the aforementioned limitations with the CCA algorithm, especially with rapidly varying PII. The 802.11e unscheduled APSD (U-APSD) scheme is an example of a handset-triggered mode.

With reference to FIG. 7, in another aspect or embodiment of the invention, a flow chart illustrate a method 70 that can combine the power and resource efficiency of inferred PII detection techniques as discussed above with the reliability of a direct PII detector into one efficient solution. It is also different than existing detection schemes in that the pre-detection state can be tuned to react only to PII that degrades performance.

The method 70 can begin by determining if the device is in a direct detector state at decision block 71. If not in a direct detector state, then the method can run a pre-detector or a PII inferred detector at step 72 similar to any of the detection schemes previously discussed with reference to FIGs. 1-6. If PII is detected by the inferred detector (or pre-detector) at decision block 73, then the direct detector state is entered at step 74. If no PII is detected by the inferred detector (or pre-detector) at decision block 73, then the channel can be set to clear/busy based on the IEEE 802.11 default implementation (e.g., CCA) at step 75. If decision block 71 determines that the device is in a direct detector state, then the direct detector is run at step 76. If PII is detected by the direct detector at decision block 77, then a probation counter is reset at step 82 and the channel indication is set to clear/busy based on the direct detector implementation at step 81. If no PII is detected at decision block 77, a probation counter is incremented at step 78 and an inquiry is made whether a probation counter is above a probation threshold at decision step 79. If the probation counter is not above the probation counter at decision block 79, then the channel indication is once again set to clear/busy based on the direct detector implementation at step 81. If the probation counter is above the probation counter at step 79, then the direct detector state can be exited at step 80 and the channel indication is once again set to clear/busy based on the direct detector implementation at step 81. The process described above is run each time a frame is ready for transmission.

The embodiments herein provide a framework for power efficient detection of PII that is degrading system performance. The methods herein precede a direct energy-measuring PII detection mechanism with some type of indirect or inferred PII pre-detection mechanism as demonstrated by method 70 of FIG. 7. An example of such a pre-detector is a detector which infers the presence of PII through MAC layer (retransmission) statistics. Use of such detectors reduces the power and resource demands during periods of no interference, only triggering continuous channel observation when the presence of PII seems likely. If the pre-detector is performance based (as opposed to channel energy sensing), then this approach also avoids unnecessary modification of transmission behavior when PII is present on the channel but not adversely impacting system performance. The direct detector continues operating until it no longer detects PII (i.e., after a "probation period" to introduce hysteresis) at which point the direct detector stops running and the pre-detector resumes operation.

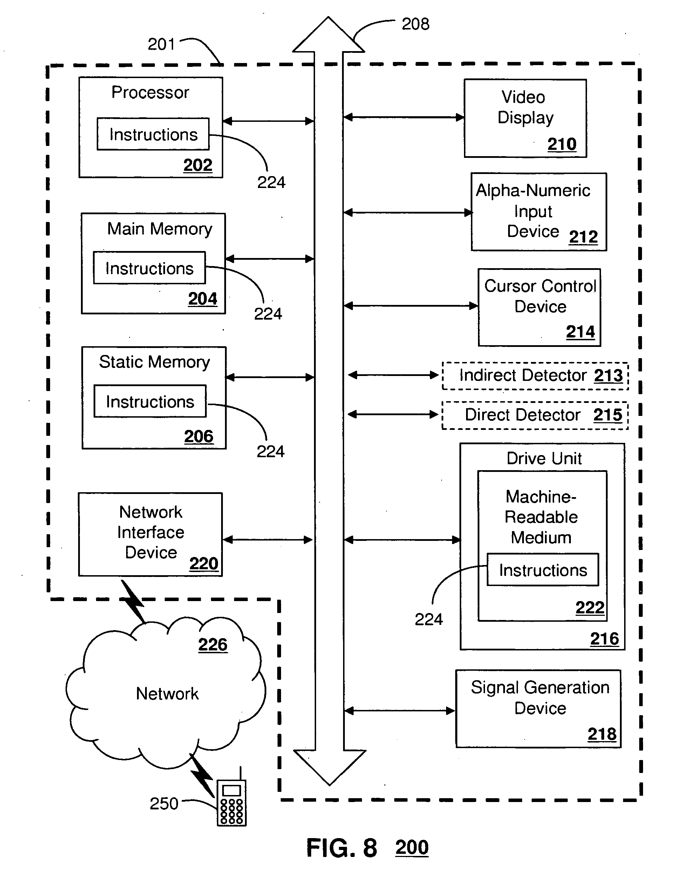

FIG. 8 depicts an exemplary diagrammatic representation of a machine in the form of a computer system 200 within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment. For example, the computer system can include a recipient device 201 and a sending device 250 or vice-versa.

The machine may comprise a server computer, a client user computer, a personal computer (PC), a tablet PC, personal digital assistant, a cellular phone, a laptop computer, a desktop computer, a control system, a network router, switch or bridge, or any machine capable of executing a set of instructions (sequential or otherwise) that specify actions to be taken by that machine, not to mention a mobile server. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 200 can include a controller or processor 202 (e.g., a central processing unit (CPU), a graphics processing unit (GPU, or both), a main memory 204 and a static memory 206, which communicate with each other via a bus 208. The computer system 200 may further include a presentation device such as a video display unit 210 (e.g., a liquid crystal display (LCD), a flat panel, a solid state display, or a cathode ray tube (CRT)). The computer system 200 may include an input device 212 (e.g., a keyboard), a cursor control device 214 (e.g., a mouse), a disk drive unit 216, a signal generation device 218 (e.g., a speaker or remote control that can also serve as a presentation device) and a network interface device 220. The embodiments can also optionally include an indirect or inferred detector 213 and a direct detector 215 which can be in hardware or software or any combination thereof. These direct or indirect detection functions can alternatively be done within the contemplated embodiments in the processor 202 which can be a DSP. Of course, in the embodiments disclosed, many of these items are optional.

The disk drive unit 216 may include a machine-readable medium 222 on which is stored one or more sets of instructions (e.g., software 224) embodying any one or more of the methodologies or functions described herein, including those methods illustrated above. The instructions 224 may also reside, completely or at least partially, within the main memory 204, the static memory 206, and/or within the processor 202 during execution thereof by the computer system 200. The main memory 204 and the processor 202 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present invention, the methods described herein are intended for operation as software programs running on a computer processor. Furthermore, software implementations can include, but are not limited to, distributed processing or component/object distributed processing, parallel processing, or virtual machine processing can also be constructed to implement the methods described herein. Further note, implementations can also include neural network implementations, and ad hoc or mesh network implementations between communication devices.

The present disclosure contemplates a machine readable medium containing instructions 224, or that which receives and executes instructions 224 from a propagated signal so that a device connected to a network environment 226 can send or receive voice, video or data, and to communicate over the network 226 using the instructions 224. The instructions 224 may further be transmitted or received over a network 226 via the network interface device 220.

While the machine-readable medium 222 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure. The terms "program," "software application," and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

In light of the foregoing description, it should be recognized that embodiments In accordance with the present invention can be realized In hardware, software, or a combination of hardware and software. A network or system according to the present invention can be realized in a centralized fashion In one computer system or processor, or In a distributed fashion where different elements are spread across several interconnected computer systems or processors (such as a microprocessor and a DSP). Any kind of computer system, or other apparatus adapted for carrying out the functions described herein, is suited. A typical combination of hardware and software could be a general purpose computer system with a computer program that, when being loaded and executed, controls the computer system such that it carries out the functions described herein. Further note, the embodiments are not necessarily limited to song files, but can also include video files or multimedia files that can have a pace or tempo associated with such files.

In light of the foregoing description, it should also be recognized that embodiments in accordance with the present invention can be realized in numerous configurations contemplated to be within the scope of the claims. Additionally, the description above is intended by way of example only and is not intended to limit the present invention in any way, except as set forth in the following claims.

**Claims**

1. A method of detecting periodic intermittent interference PII, comprising the steps of:

     tracking (14, 16, 18) retransmission statistics of isochronous traffic or tracking channel probe request failures corresponding to temporal characteristics of microwave oven interference; and signaling (24) PII if the retransmission statistics exceed a predetermined threshold or if the probe failure requests exceed another predetermined threshold.

2. The method of claim 1, wherein the step of tracking retransmission statistics comprises the step of tracking (16) MAC layer statistics.

3. The method of claim 1, wherein the method tracks (16) retransmission statistics for Voice over WLAN traffic or tracks (18) success and failures of probe requests for data traffic.

4. The method of claim 1, wherein the step of tracking retransmission statistics comprises the step of tracking (16) a number of retransmission attempts required per transmission opportunity (TXOP).

5. The method of claim 1, wherein the method comprises the step of using a correlator to detect (20) alternating periods of low and high retransmissions counts of isochronous traffic.

6. The method of claim 1, wherein the method further comprises the step of introducing (28) hysteresis in the detection of the PII to prevent rapid entering and exiting from a current detection mode.

7. The method of claim 1, wherein the method further comprises the step of correlating (22) retransmission statistics with a stored retransmission pattern and signaling detection of PII if a correlation exceeds a predetermined correlation threshold.

8. The method of claim 7, wherein the method further comprises signaling (26) detection of PII if the correlation exceeds the predetermined correlation threshold and else incrementing a probation counter and indicating a lack of PII detected until the probation counter exceeds a predetermined probation threshold.

9. The method of claim 1, wherein the signaling of PII using retransmission statistics or probe failure request is an indirect detection mode and the method further comprises the step of operating (29) in a direct PII detection mode if the indirect detection mode indicates PII.

10. A communication device adapted to perform steps of the method as claimed in any preceding claim.

11. A computer program comprising program instructions adapted to perform the steps of the method of any one of claims 1 to 9 when said program is run on a computer processor.

12. A machine-readable medium carrying a computer program according to claim 11.

**Patentansprüche**

1. Verfahren zur Erfassung periodisch intermittierender Interferenzen (PII), das die folgenden Schritte aufweist:

     Verfolgen (14, 16, 18) von Weitermeldungsstatistiken von isochronem Verkehr oder Verfolgen von Kanalprobe-Anfragefehlern, entsprechend zeitlichen Merkmalen einer Mikrowellenofen-Interferenz, und
     Signalisieren (24) von PII, wenn die Weitermeldungsstatistiken eine vorgegebene Schwelle überschreiten oder wenn die Probe-Fehleranfragen eine andere vorgegebene Schwelle überschreiten.

2. Verfahren nach Anspruch 1, wobei der Schritt des Verfolgens von Weitermeldungsstatistiken den Schritt des Verfolgens (16) von MAC-Schicht-Statistik aufweist.

3. Verfahren nach Anspruch 1, wobei das Verfahren Weitermeldungsstatistiken für Voice-over-WLAN-Verkehr verfolgt (16) oder Erfolg und Fehler von Probe-Anfragen nach Datenverkehr verfolgt (18).

4. Verfahren nach Anspruch 1, wobei der Schritt des Verfolgens von Weitermeldungsstatistiken den Schritt des Verfolgens (16) einer Anzahl von Weitermeldungsversuchen, die pro Übertragungsmöglichkeit (TXOP) benötigt wird, aufweist.

5. Verfahren nach Anspruch 1, wobei das Verfahren den Schritt des Verwendens eines Korrelators zur Erfassung (20) von alternierenden Phasen einer niedrigen oder hohen Anzahl von Weitermeldungen von isochronem Verkehr aufweist.

**6.** Verfahren nach Anspruch 1, wobei das Verfahren des Weiteren den Schritt des Einführens (28) von Hysterese in der Erfassung der PII zur Vermeidung von schnellem Eintritt in und Verlassen eines Stromerfassungsmodus aufweist.

**7.** Verfahren nach Anspruch 1, wobei das Verfahren des Weiteren den Schritt des Korrelierens (22) von Weitermeldungsstatistiken mit einem gespeicherten Weitermeldungsmuster und Signalisieren des Erfassens von PII aufweist, wenn eine Korrelation eine vorgegebene Korrelationsschwelle übersteigt.

**8.** Verfahren nach Anspruch 7, wobei das Verfahren des Weiteren ein Signalisieren (26) der Erfassung von PII aufweist, wenn die Korrelation die vorgegebene Korrelationsschwelle übersteigt und andernfalls eine Erhöhung eines Probezählers und ein Anzeigen eines Mangels an erfasster PII, bis der Probezähler eine vorgegebene Probeschwelle überschreitet.

**9.** Verfahren nach Anspruch 1, wobei das Signalisieren von PII unter Verwendung von Weitermeldungsstatistiken oder Proben-Fehleranfrage ein indirekter Erfassungsmodus ist und das Verfahren des Weiteren den Schritt des Betriebs (29) in einem direkten PII-Erfassungsmodus aufweist, wenn der indirekte Erfassungsmodus auf PII hinweist.

**10.** Kommunikationsgerät, das so angepasst ist, das es die Schritte des Verfahrens gemäß den vorhergehenden Ansprüchen ausführt.

**11.** Computerprogramm, das Programmbefehle aufweist, das so angepasst ist, dass es die Schritte des Verfahrens gemäß einem der Ansprüche 1 bis 9 ausführt, wenn besagtes Programm auf einem Computerprozessor betrieben wird.

**12.** Maschinenlesbares Medium, das ein Computerprogramm gemäß Anspruch 11 führt.

**Revendications**

**1.** Procédé pour détecter une interférence intermittente périodique *PII*, comprenant les étapes de:

suivre (14, 16, 18) des statistiques de retransmission de défaillances de demandes de sonde de trafic isochrone ou de canal de poursuite correspondant aux caractéristiques temporelles de l'interférence d'un four à micro-ondes; et signaler (24) une PII si les statistiques de retransmission dépassent un seuil prédéterminé ou si la demande de défaillance de sonde dépasse un autre seuil prédéterminé.

**2.** Procédé selon la revendication 1, dans lequel l'étape de poursuite des statistiques de retransmission comprend l'étape consistant à suivre (16) les statistiques de la couche MAC.

**3.** Procédé selon la revendication 1, dans lequel le procédé suit (16) les statistiques de retransmission pour les succès et défaillances du trafic ou des voies (18) de Voix sur WLAN des demandes de sonde pour trafic des données.

**4.** Procédé selon la revendication 1, dans lequel l'étape de la poursuite des statistiques de retransmission comprend l'étape consistant à suivre (16) un nombre de tentatives de retransmission requis par l'opportunité de transmission (TXOP).

**5.** Procédé selon la revendication 1, dans lequel le procédé comprend l'étape consistant à utiliser un corrélateur pour détecter (20) des périodes alternantes de comptes de retransmission bas et élevés de trafic isochrone.

**6.** Procédé selon la revendication 1, dans lequel le procédé comprend en outre l'étape consistant à introduire (28) de l'hystérésis dans la direction de la PII pour prévenir une entrée et sortie rapides d'un mode de détection de courant.

**7.** Procédé selon la revendication 1, dans lequel le procédé comprend en outre l'étape consistant à mettre en corrélation (22) les statistiques de retransmission avec un modèle de retransmission stocké et la signalisation de la détection de la PII si une corrélation dépasse un seuil de corrélation prédéterminé.

**8.** Procédé selon la revendication 7, dans lequel le procédé comprend en outre la signalisation (26) de la détection de la PII si la corrélation dépasse le seuil de corrélation prédéterminé et l'incrémentation d'un compteur de probation et l'indication d'une absence de PII détectée jusqu'à ce que le compteur de probation dépasse un seuil de probation prédéterminé.

**9.** Procédé selon la revendication 1, dans lequel la signalisation de la PII utilisant les statistiques de retransmission ou la requête de défaillance de sonde est un mode de détection indirect, et le procédé comprend en outre l'étape de fonctionnement (29) en un mode de détection de PII direct si le mode de détection indirect indique une PII.

**10.** Dispositif de communication apte à exécuter les étapes du procédé tel que revendiqué dans l'une quelconque des revendications précédentes.

**11.** Programme informatique comprenant les instructions de programme apte à exécuter les étapes du procédé selon l'une quelconque des revendications 1 à 9 lorsque ledit programme est exécuté sur un processeur d'ordinateur.

12. Support lisible par machine supportant un programme informatique selon la revendication 11.

## FIG. 1  <u>10</u>

| INDIRECT PII DETECTION MODE | <u>12</u> |
|---|---|

TRACK RETRANSMISSION STATISTICS OF ISOCHRONOUS
TRACK OR TRACK CHANNEL PROBE REQUEST      <u>14</u>
FAILURES CORRESPONDING TO TEMPORAL CHARACTERISTICS
OF MICROWAVE OVEN INTERFERENCE

TRACK RETRANSMISSION STATISTICS BY TRACKING
MAC LAYER STATISTICS OR BY TRACKING RETRANSMISSION  <u>16</u>
STATISTICS FOR VOICE OVER WLAN OR BY TRACKING A NUMBER OF
RETRANSMISSION ATTEMPTS REQUIRED
PER TRANSMISSION OPPORTUNITY.

TRACK SUCCESS AND FAILURES OF      <u>18</u>
PROBE REQUESTS FOR DATA TRAFFIC

CORRELATE USING A CORRELATOR TO DETECT ALTERNATING <u>20</u>
PERIODS OF LOW AND HIGH RETRANSMISSION COUNTS
OF ISOCHRONOUS TRAFFIC.

CORRELATE RETRANSMISSION STATISTICS WITH
A STORED RETRANSMISSION PATTERN AND SIGNAL      <u>22</u>
DETECTION OF PII IF A CORRELATION EXCEEDS
A PREDETERMINED CORRELATION THRESHOLD.

SIGNAL PII IF THE RETRANSMISSION STATISTICS EXCEED A  <u>24</u>
PREDETERMINED THRESHOLD OR IF THE PROBE FAILURE
REQUESTS EXCEED ANOTHER PREDETERMINED THRESHOLD

SIGNALING DETECTION OF PII IF THE CORRELATION EXCEEDS <u>26</u>
THE PREDETERMINED CORRELATION THRESHOLD AND
ELSE INCREMENT A PROBATION COUNTER AND INDICATE A LACK OF
PII DETECTED UNTIL THE PROBATION COUNTER EXCEEDS A
PREDETERMINED PROBATION THRESHOLD.

INTRODUCE HYSTERESIS IN THE DETECTION OF THE PII
TO PREVENT RAPID ENTERING AND EXITING FROM      <u>28</u>
A CURRENT DETECTION MODE.

OPERATING IN A DIRECT PII DETECTION MODE IF
THE INDIRECT DETECTION MODE INDICATES PII.      <u>29</u>

**30**

**FIG. 2**

Network **36**

**40**

**FIG. 3**

Start

Does TXOP contain frame(s) of the selected traffic class? — 41

no

yes

Update retry history with statistics corresponding to current TXOP — 42

Correlate retry history against stored retry patterns — 43

Is correlator metric above C-threshold? — 44

no

Increment probation counter — 47

yes

reset probation counter — 45

Is probation counter above P-threshold? — 48

46

no

Indicate PII detected

yes

Indicate PII not detected — 49

End

| | Pattern A | Pattern B |
|---|---|---|
| Length-5 | [H H H L L] | [H H L H L] |
| Length-6 | [H H H L L H] | [H H L H L H] |
| Length-7 | [H H H L L H H] | [H H L H L H H] |
| Length-8 | [H H H L L H H H] | [H H L H L H H L] |
| Length-9 | [H H H L L H H H L] | [H H L H L H H L H] |
| Length-10 | [H H H L L H H H L L] | [H H L H L H H L H L] |
| etc. | ... | ... |

**50**

# FIG. 4

Retransmission count for last
TXOP

Retransmission
History Buffer
(Length = N)                56

(length-N retry history
vector)                      57

| Length-N Correlator 1 | Length-N Correlator 2 | ... | Length-N Correlator M |

Scalar correlator
outputs                      58

Threshold test (with optional hysteresis) on MAX
correlator input value

microwave oven indication

**55**

# FIG. 5

$$\underline{T}_1 = \begin{bmatrix} H & H & H & L & L & H & H & H & L & L \\ L & H & H & H & L & L & H & H & H & L \\ L & L & H & H & H & L & L & H & H & H \\ H & L & L & H & H & H & L & L & H & H \\ H & H & L & L & H & H & H & L & L & H \end{bmatrix}$$

**60**

**FIG. 6**

Start

ready for transmission

71 — In direct detector state? — yes → Run direct detector — 76

no ↓

72 — Run PII inferred detector

77 — PII detected by direct detector? — yes

no ↓

78 — Increment probation counter

reset probation counter

73 — PII detected by inferred detector? — no

82 ／ 79 — Is probation counter above P-threshold? — no

yes ↓

74 — Enter direct detector state

80 — Exit direct detector state

75 — Set channel clear/busy indication based on default implementation (e.g. CCA)

81 — Set channel clear/busy indication based on direct-detector implementation

End

**70**

**FIG. 7**

FIG. 8  200

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003126492 A
- US 20060120333 A